# EUROPEAN PATENT APPLICATION

(11) **EP 3 940 936 A1**
(43) Date of publication of application: **19.01.2022**
(21) Application number: 20186232.3
(22) Date of filing: 16.07.2020
(51) Int. Cl.: H02M 1/084, H02M 1/32, H02M 7/00, H02M 7/49

(54) **ELECTRICAL CONVERTER WITH BYPASS FUNCTION**

(71) Applicant: ABB Schweiz AG, 5400 Baden (CH)
(72) Inventor: Schlapbach, Ulrich, 3097 Liebefeld (CH); Mueller, Andreas, 28325 Bremen (DE); Lendenmann, Heinz, 72218 Västerås (SE)
(74) Representative: Qip Patentanwälte Dr. Kuehn & Partner mbB

(57) **Abstract**

An electrical converter (100) comprises: a plurality of converter cells (104) series-connected at their outputs, each of the converter cells (104) adapted for converting a supply voltage (110) into an output voltage (114); a superordinate controller (230) for controlling the output voltage (114) of each of the converter cells (104); wherein each of the converter cells (104) comprises a control board (218) for controlling power switches (S1, S2, S3, S4) of the converter cell (104), a bypass device (222) adapted for short-circuiting the converter cell (104) at its output and an additional control board (224) for controlling the bypass device (222); wherein each of the control boards (218) is at least connected to the superordinate controller (230) for data communication; wherein each of the additional control boards (224) is at least connected to another additional control board (224) for data communication.

## Description

### FIELD OF THE INVENTION

The invention relates to the field of electric power conversion. In particular, the invention relates to an electrical converter. Furthermore, the invention relates to a method for bypassing a converter cell of an electrical converter.

### BACKGROUND OF THE INVENTION

An electrical multi-phase converter, i.e. a converter adapted for providing more than one output phase to a load, comprises phase branches, also called legs, that may be individually switched to generate a respective output voltage for each phase. The phase branches may be assembled of converter cells with individual power supplies such as, for example, individual DC links supplied by a rectifier of each converter cell.

In some cases, the converter may stop working when one of the converter cells fails, e.g. due to a short circuit within the converter cell. To avoid this, a failed converter cell may be bypassed by closing a bypass switch at an output of the failed converter cell. The bypass switch may be controlled by a local controller integrated in the converter cell or by a master controller of the converter, which, for example, may be connected to each individual converter cell via a fiber optic interface.

US 10,199,955 B2 shows an electrical multi-phase converter comprising at least two phase branches, each of which comprising multiple converter cells series-connected at their outputs.

### DESCRIPTION OF THE INVENTION

It is an objective of the invention to simplify the implementation of a bypass function in an electrical converter. A further objective of the invention is to improve the reliable operation of the electrical converter.

This objective is achieved by the subject-matter of the independent claims. Further exemplary embodiments are evident from the dependent claims and the following description.

An aspect of the invention relates to an electrical converter comprising: a plurality of converter cells series-connected at their outputs, each of the converter cells adapted for converting a supply voltage into an output voltage; a superordinate controller for controlling the output voltage of each of the converter cells.

The electrical converter may be a high power converter adapted for processing voltages greater than 1 kV and/or currents greater than 10 A.

The supply voltage may be an AC voltage provided by a secondary coil of a transformer. Furthermore, the supply voltage may be a DC link voltage provided by a DC link of each of the converter cells. The converter cells may each comprise an inverter adapted for converting a DC supply voltage, which may be the DC link voltage, into an AC output voltage. Furthermore, the converter cells may each comprise a rectifier, e.g. an active rectifier, adapted for converting an AC supply voltage, which may be the AC voltage provided by the transformer, into a DC output voltage, which may be the DC link voltage.

A converter cell may for example be a power electronics building block (PEBB). The converter cells may be series-connected within a phase branch or leg adapted for providing a phase voltage of a multi-phase output voltage of the electrical converter.

A superordinate controller may be a master controller, e.g. in the form of a control hub, which may be adapted for controlling the output voltage of each of the converter cells individually.

According to an embodiment of the invention, each of the converter cells comprises a control board for controlling power switches of the converter cell, a bypass device adapted for short-circuiting the converter cell at its output and an additional control board for controlling the bypass device.

According to an embodiment of the invention, each of the control boards is at least connected to the superordinate controller for data communication.

According to an embodiment of the invention, each of the additional control boards is at least connected to another additional control board for data communication.

A control board may be a local controller integrated in each of the converter cells and may be adapted for executing commands provided by the superordinate controller. The control board may be adapted for controlling gate drivers of the converter cell based on these commands.

Furthermore, the control board may comprise a data communication interface, e.g. a (time-triggered) Ethernet interface or an optical I/O interface, for communicating with components of the converter cell, such as the gate drivers or one or more sensors for measuring a voltage, current and/or temperature of the converter cell, and/or with the superordinate controller. The gate drivers and/or the sensor(s) may also be integrated in the control board.

The control board and the additional control board of a converter cell may be physically separated units. In particular, the control board and the additional control board may be printed circuit boards which can be assembled into the converter cell independently from each other. Similar to the control boards, the additional control boards may each comprise a data communication interface. For example, the additional control boards of different converter cells may be interconnected in a data communication network which is independent from a data communication network interconnecting the superordinate controller and the control boards. In particular, the additional control boards may be daisy-chained with each other by using unidirectional or bidirectional links.

A power switch may be a power semiconductor switch such as, for example, an IGBT, MOSFET or thyristor.

A bypass device may comprise at least one bypass switch which, in a closed or conductive state, short-circuits the output terminals of the converter cell. Such a bypass switch may for example be a magnetic contactor, a spring-loaded contact, a pair of anti-parallel thyristors or a pair of series-connected transistors.

According to an embodiment of the invention, at least one of the additional control boards is additionally connected to the superordinate controller for data communication. For example, one or more of the additional control boards may be adapted for receiving data from the superordinate controller and for transmitting this data to at least one further additional control board. Additionally or alternatively, one or more of the additional control boards may be adapted for receiving data from at least one further additional control board and for transmitting this data to the superordinate controller. In other words, data may be looped through via one or more of the additional control boards to the superordinate controller and/or at least one further additional control board. This has the advantage that only part of the additional control boards, e.g. one or two of them, needs to be directly connected to the superordinate controller for data communication.

According to an embodiment of the invention, the additional control boards are linked together in a daisy chain adapted for transmitting data from one additional control board to the next. A daisy chain may be a data communication network with a linear topology, where data is transmitted from a first node to a second node, from the second node to a third node, and so on until the data is received by a last node in the daisy chain (the nodes being additional control boards of different converter cells). Additionally, the data may be transmitted in the same manner in the opposite direction from the last node to the first node.

According to an embodiment of the invention, the additional control boards at each end of the daisy chain are additionally connected to the superordinate controller for data communication. In other words, the daisy chain may be part of a data communication network with a ring topology, where the first node of the daisy chain is connected to the superordinate controller as well as to a second node in the daisy chain and where the last node of the daisy chain is connected to the superordinate controller as well as to a penultimate node in the daisy chain. Data communication links between the additional control boards and/or between the superordinate controller and the additional control boards may be unidirectional or bidirectional.

According to an embodiment of the invention, the superordinate controller and the additional control boards are linked together in a bidirectional ring network. In other words, data may be transmitted in a loop through redundant paths in inverse directions.

According to an embodiment of the invention, the control board and the additional control board of each of the converter cells are additionally connected to each other for data communication. For example, the control board and the additional control board may be interconnected via a unidirectional link such that data is transmitted from the additional control board to the control board or vice versa. Alternatively, data may be transmitted in both directions between the control board and the additional control board. It is possible that the superordinate controller, the control board and the additional control board are interconnected in a unidirectional or bidirectional three-node ring, such that data sent from the superordinate controller can be looped through to the control board via the additional control board and fed back from the control board to the superordinate controller. In the case where the additional control boards are additionally interconnected in a daisy chain, the data may additionally be transmitted to the next additional control board in the daisy chain. The daisy chain may be independent of each of the three-node rings.

According to an embodiment of the invention, the bypass device comprises at least two parallel-connected bypass switches. For example, the bypass device may comprise a first bypass switch and a second bypass switch, wherein the second bypass switch is closed with a certain delay to the first bypass switch. In this way, an electric arc between the contacts of the second bypass switch can be suppressed.

According to an embodiment of the invention, the at least two bypass switches have different current ratings and/or different switching times. For example, the current rating of the first bypass switch, which is used for absorbing the energy of the electric arc, may be significantly higher than the current rating of the second bypass switch.

According to an embodiment of the invention, a power supply of the additional control board is connected to a supply voltage input of the converter cell. This has the advantage that the additional control board and, additionally, the bypass device can be supplied with electrical energy independently from a DC link voltage of the converter cell. It may be that the control board and the additional control board of each of the converter cells are connected at their respective supply voltage inputs to different voltage sources. For example, the control board may be connected at its supply voltage input to a DC link of the converter cell.

According to an embodiment of the invention, the supply voltage input comprises a fuse, wherein the power supply is connected to an input side of the fuse. This has the advantage that the additional control board and, additionally, the bypass device can be supplied with the supply voltage even when the fuse at the supply voltage input is blown.

According to an embodiment of the invention, each of the converter cells comprises an H-bridge inverter. Each of the converter cells may be adapted for providing the output voltage in two different directions to a phase branch or leg of the electrical converter.

According to an embodiment of the invention, each of the converter cells comprises a rectifier, an inverter and a DC link connecting the rectifier to the inverter and providing a DC supply voltage for the inverter. For example, the rectifiers of the converter cells may each be supplied by an AC voltage provided by a transformer, which may be connected at its primary coil to a large scale grid.

According to an embodiment of the invention, the plurality of converter cells are series-connected at their outputs in each of a plurality of phase branches adapted for providing a multi-phase output voltage and the additional control boards within each phase branch are linked together in a daisy chain adapted for transmitting data from one additional control board to the next. Each of the phase branches may comprise a plurality of series-connected converter cells. The phase branches may for example be star-connected.

A further aspect of the inventions relates to a method for bypassing a converter cell of an electrical converter such as described above and below.

It has to be understood that features of the method as described above and below may be features of the electrical converter as described above and below, and vice versa.

The method comprises: receiving data at each additional control board of each converter cell of the electrical converter, wherein the data is received from the additional control board of another converter cell of the electrical converter; when the data indicates that the converter cell should be bypassed: controlling the bypass device of the converter cell such that the converter cell is short-circuited at its output.

According to an embodiment of the invention, the data comprises measured output voltages of each of the converter cells. The measured output voltages may be provided by a voltage sensor integrated in each converter cell. The measured output voltage may for example be a measured output voltage of a half bridge of the converter cell. Additionally, the data may comprise measured currents and/or measured temperatures of each of the converter cells.

According to an embodiment of the invention, the data comprises control signals for controlling the power switches and/or the bypass devices of the electrical converter. The control signals may be provided by the superordinate controller of the electrical converter.

It is possible that each of the additional control boards is adapted for detecting a failed converter cell from the received data. In this case, the data may comprise measured output voltages and/or output currents and/or temperatures of every single converter cell. The failed converter cell may be detected by comparing the measured output voltages and/or output currents and/or temperatures with each other.

Alternatively, a failed converter cell may be detected by the superordinate controller itself, e.g. based on voltage, current and/or temperature measurements signals provided by the control boards of the converter cells. In this case, the superordinate controller may provide a control signal indicating that the failed converter cell should be bypassed. The control signal may then be transmitted to the failed converter cell via the daisy chain.

Further aspects of the invention relate to a computer program comprising instructions which, when the computer program is executed by a computer, cause the computer to carry out the method as described above and below and to a computer-readable medium having stored thereon such a computer program. The method described above and below may also be at least partially implemented in hardware, e.g. in the form of an FPGA (Field Programmable Gate Array) or a DSP (Digital signal processor). For example, a trained neural network or a further artificial intelligence device may be implemented by the computer program.

A computer-readable medium may be a floppy disk, a hard disk, a USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a nonvolatile or volatile memory.

It has to be understood that features of the method as described above and below may be features of the computer program and/or the computer-readable medium and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows an electrical converter according to an embodiment of the invention.
Fig. 2 schematically shows components of a converter cell according to an embodiment of the invention.
Fig. 3 schematically shows a signal flow in an electrical converter according to an embodiment of the invention.
Fig. 4 schematically shows a signal flow in an electrical converter according to a further embodiment of the invention.
Fig. 5 shows a flow diagram illustrating a method for bypassing a converter cell of an electrical converter according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

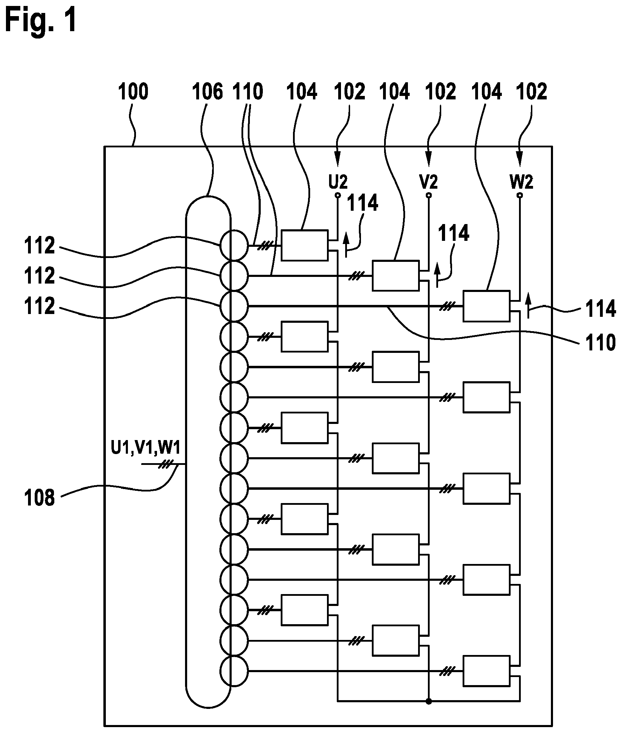

Fig. 1 schematically shows an electrical converter 100 with three phase branches 102, each of which comprising a plurality of series-connected converter cells 104. In this example, each phase branch 102 comprises five series-connected converter cells 104. Furthermore, the electrical converter 100 comprises a transformer 106 adapted for transforming an input voltage 108 into a supply voltage 110. The input voltage 108 may be a three-phase AC voltage with phases U1, V1, W1, e.g. a grid voltage provided by an electrical grid. The transformer 106 may have a plurality of secondary coils 112, each of which connected to one converter cell 104 such that the supply voltage 110 is fed into each of the converter cells 104 individually. The converter cells 104 convert the supply voltage 110 into an output voltage 114.

The converter cells 104 of each phase branch 102 are series-connected at their outputs. Thus, the output voltage of each phase branch 102 is equal to the sum of the individual output voltages 114 of the converter cells 104 within the phase branch 102. Each phase branch 102 may correspond to one of three phases U2, V2, W2.

The phase branches 102 may be star-connected at one end and connected to a load (not shown) at another end.

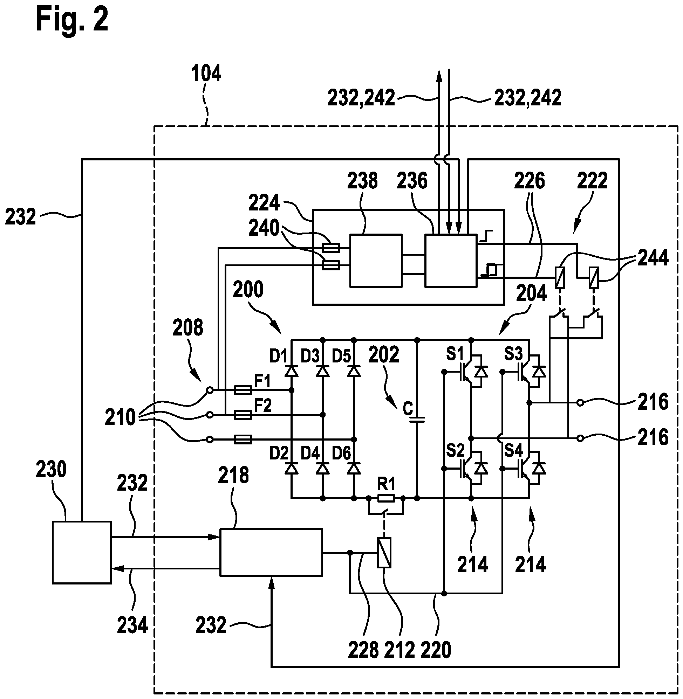

The converter cells 104 may each be designed as shown in fig. 2 and described in the following.

Fig. 2 schematically shows some of the components of a converter cell 104 as shown in fig. 1. The converter cell 104 may comprise a rectifier 200, a DC link 202 and an inverter 204. The rectifier 200 may convert an AC input voltage, i.e. the supply voltage 110 provided by the secondary coils 112 of the transformer 106, into a DC link voltage and may provide the DC link voltage to the DC link 202. The DC link 202 may supply the inverter 204 with the DC link voltage. The inverter 204 may then convert the DC link voltage into the output voltage 114 of the converter cell 104.

The rectifier 200 may be a passive rectifier with a first leg comprising series-connected diodes D1 and D2, a second leg comprising series-connected diodes D3 and D4 and a third leg comprising series-connected diodes D5 and D6. The first, second and third leg may be connected in parallel to the DC link 202.

A supply voltage input 208 of the converter cell 104 may comprise three input terminals 210, each of which corresponding to one of the three phases of the supply voltage 110. The input terminals 210 may be connected to midpoints between the diodes D1 to D6.

In this example, two of the three input terminals 210 are connected via input fuses F1, F2 to the midpoints of the rectifier 200.

Optionally, a charging resistor R1 may be series-connected to a DC link capacitor C of the DC link 202. The charging resistor R1 may be bypassed by means of a charging resistor bypass switch 212, e.g. a contactor.

The inverter 204 may be an H-bridge inverter. For example, the inverter 204 may comprise two half bridges 214 connected in parallel to the DC link 202. Each half bridge 214 may comprise two series-connected power switches S1, S2 and S3, S4, e.g. IGBTs. Midpoints between the power switches S1 to S4 may each be connected to an output terminal 216 of the converter cell 104. The inverter 204 may also be based on other topologies, e.g. a two-level topology, three-level neutral-point-clamped topology or three-level active-neutral-point-clamped topology.

Furthermore, the converter cell 104 comprises a control board 218 adapted for providing switching signals 220 for the power switches S1 to S4, a bypass device 222 adapted for short-circuiting the output terminals 216 and an additional control board 224 adapted for providing bypass switching signals 226 for the bypass device 222.

Additionally, the control board 218 may provide a further switching signal 228 for the charging resistor bypass switch 212.

The control board 218 is connected to a superordinate controller 230 of the electrical converter 100 for data communication, for example via a fiber optic interface (not shown). The superordinate controller 230 may generate a control signal 232 for the converter cell 104 from a reference voltage and/or reference current in combination with a measurement signal 234, which may be a voltage, current and/or temperature measurement signal provided by one or more sensors (not shown) of the converter cell 104 and transmitted via the control board 218 to the superordinate controller 230. The control signal 232 may be sent from the superordinate controller 230 directly to the control board 218. Accordingly, the control board 218 may generate the switching signals 220 and/or the further switching signal 228 from the control signal 232.

Alternatively, the control signal 232 may be sent from the superordinate controller 230 to the additional control board 224 and looped through to the control board 218 via the additional control board 224 (as described in more detail below).

The additional control board 224 may comprise a bypass control circuit 236 for controlling the bypass device 222 and a power supply 238 connected at its output to the bypass control circuit 236. The power supply 238 may be connected at its input to two of the input terminals 210 and may convert a supply voltage between the two input terminals 210 into a supply voltage for the bypass control circuit 236.

As shown in fig. 1, the input of the power supply 238 may be connected to the two input terminals 210 protected by the input fuses F1, F2. In this case, the input of the power supply 238 may be connected to an input side of each fuse F1, F2.

The input terminals 210 and the power supply 238 may be interconnected via additional fuses 240. The additional fuses 240 may be part of the additional control board 224.

It is possible that the control board 218 and the additional control board 224 are supplied by different voltage sources. For example, the control board 218 may be supplied with the DC link voltage from the DC link 202.

The bypass control circuit 236 may be connected to the bypass control circuit 236 of at least one other additional control board 224 for data communication.

For example, the bypass control circuits 236 of different converter cells 104 may be series-connected for data communication, which may also be referred to as daisy-chaining. In this case, each bypass control circuit 236 may be adapted for receiving data 242, e.g. the control signal 232 and/or measured voltages, currents and/or temperatures of each converter cell 104, from a preceding node of the daisy chain and/or for transmitting the data 242 to a subsequent node of the daisy chain.

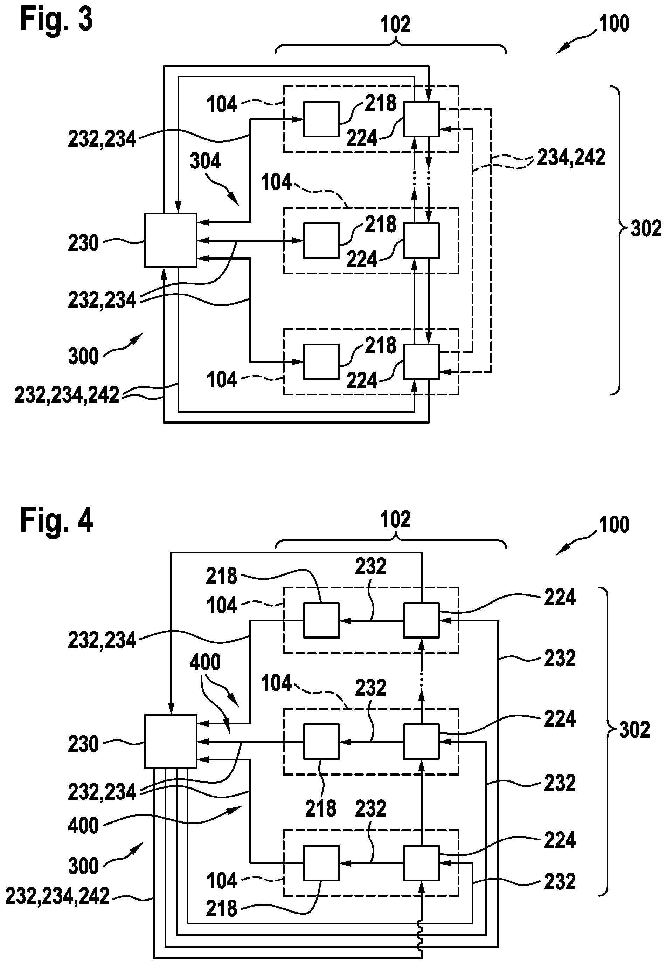

In order to transmit the control signal 232 via the daisy chain, at least one of the nodes, i.e. at least one of the bypass control circuits 236, may further be connected to the superordinate controller 230 for data communication (see also figure 3 and 4).

It is possible that the data 242 is transmitted between the additional control boards 224 independently from the superordinate controller 230 and/or the control board 218.

The bypass control circuit 236 may use the data 242 to generate the bypass switching signals 226. For example, the bypass control circuit 236 may detect a failure of the converter cell 104 from the measured voltages and/or currents and/or temperatures of each of the daisy-chained converter cells 104 and generate the bypass switching signals 226 accordingly, which cause the bypass device 222 to short-circuit the output terminals 216.

Alternatively or additionally, the superordinate controller 230 may be adapted for detecting a failure of the converter cell 104 from the measurement signal 234. In case of a failure, the superordinate controller 230 may generate the control signal 232 to operate the bypass device 222 of the failed converter cell 104, for example by adding a unique control message into a standard protocol of the control signal 232. The bypass control circuit 236 may receive the control signal 232 directly from the superordinate controller 230 and/or from a preceding node of the daisy chain and may then generate the bypass switching signals 226 from the control signal 232.

The bypass device 222 may for example comprise two bypass switches 244, which may be connected in parallel. Each bypass switch 244 may be switched into a closed state upon reception of a bypass switching signal 226. The bypass switches 244 may be operated with a time delay to each other. The time delay may be achieved by delaying the bypass switching signals 226 accordingly and/or by choosing bypass switches 244 with different inherent switching times. Furthermore, the bypass switches 244 may have different current ratings.

Fig. 3 schematically shows a signal flow between components of the electrical converter 100. In this example, the superordinate controller 230 and the additional control boards 224 of different converter cells 104 within a phase branch 102 are interconnected in a ring network 300, which may be bidirectional. That is, data, e.g. the control signals 232 provided by the superordinate controller 230 or the measurement signals 234 provided by the converter cells 104, is transmitted via two (redundant) paths between the nodes of the ring network 300 so that in case of a break of one of the paths the data can still be transmitted via the other (inverse) path without interruptions.

The additional control boards 224 may be linked together in a daisy chain 302 so that the control signal 232 and/or the measurement signals 232 are transmitted sequentially from one additional control board 224 to the next. The daisy chain 302 may be unidirectional or bidirectional (fig. 3 shows a bidirectional daisy chain 302).

To form the ring network 300, the additional control boards 224 at each end of the daisy chain 302 may further be linked to the superordinate controller 230.

As already described referring to fig. 1, the daisy chain 302 may alternatively be configured as an independent data communication network without any links to the superordinate controller 230 and/or the control boards 218. In this case, the additional control boards 224 at each end of the daisy chain 302 may be connected with each other to form a daisy chain loop, as indicated with dashed arrows in fig. 3.

Furthermore, the superordinate controller 230 and the control boards 218 may be interconnected in a star network 304, the superordinate controller 230 acting as the central hub of the star network 304. Data may be transmitted in both directions between each control board 218 and the superordinate controller 230.

Fig. 4 shows a further possible configuration of the electrical converter 100. In this example, the ring network 300 is unidirectional, i.e. having only one path between each of its nodes. However, the ring network 300 may also be bidirectional, as shown in fig. 3.

Furthermore, the control board 218 and the additional control board 224 of each converter cell 104 may be interconnected for data communication such that the control signal 232 can be looped through to the control board 218 via the additional control board 224. The control signal 232 may be received at the additional control board 224 from the superordinate controller 230 and/or from another additional control board 224 in the daisy chain 302, e.g. an adjacent additional control board 224. It is also possible that data is transmitted in both directions between the control board 218 and the additional control board 224 of each converter cell 104.

The control boards 218 may each be connected to the superordinate controller 230 by means of a unidirectional link, which, for example, may be used to send the measurement signal 234 from the control board 218 to the superordinate controller 230. Furthermore, the link may be used to send the control signal 232 from the control board 218 back to the superordinate controller 230. Data communication between each control board 218 and the superordinate controller 230 may also be bidirectional.

In addition to the ring network 300, the electrical controller 100 may comprise a plurality of three-node rings 400, each of which composed of the superordinate controller 230, the control board 218 and the additional control board 224 of one converter cell 104. For redundancy, the ring network 300 may be independent from each of the three-node rings 400. In other words, identical data may be transmitted in parallel via the ring network 300 and the three-node rings 400. The ring network 300 and/or the daisy chain 302 may be used as a primary network, whereas the three-node rings 400 may be used as secondary networks. Furthermore, the three-node rings 400 may be independent from each other.

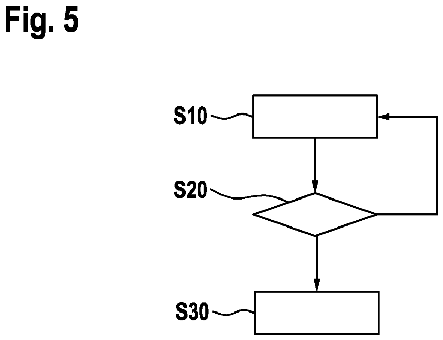

Fig. 5 shows a flow diagram illustrating a method for bypassing a converter cell 104 of the electrical converter 100. The method may be performed by the additional control board 224 of each converter cell 104, i.e. by the bypass control circuit 236 of the additional control board 224.

In step S10, the data 242 are received at the additional control board 224 from another additional control board 224, which is part of another converter cell 104 of the electrical converter 100.

In particular, the data 242 may be received via the daisy chain 302, the ring network 300 and/or the three-node ring 400.

It is possible that the data 242 comprises measured output voltages and/or measured output currents and/or measured temperatures of each of the converter cells 104 of the electrical converter 100.

For example, the data 242 may comprise the control signals 232 provided by the superordinate controller 230 and/or the measurement signals 234 provided by each converter cell 104, e.g. by each control board 218 of the converter cells 104.

In step S20, the data 242 may be processed to determine whether the respective converter cell 104 should be bypassed or not. For example, the data 242 may comprise a control message addressed to a specific converter cell 104 and generated by the superordinate controller 230, which may have detected from the measurement signal 134 of the specific converter cell 104 and/or from a combination of measurement signals 134 of different converter cells 104 that the specific converter cell 104 has a failure, e.g. due to an internal short-circuit, and should be bypassed.

In the case where the data 242 comprises the measured output voltages and/or measured output currents and/or measured temperatures of each of the converter cells 104, i.e. the measurement signals 234, a failure of the converter cell 104 may be detected by the additional control board 224 itself, independently of the superordinate controller 230, from the data 242. Accordingly, a bypass command for bypassing the respective converter cell 104 may be generated by the additional control board 224.

In step S30, the bypass switching signals 226 for the bypass device 222 may be generated and applied to the bypass device 222 by the additional control board 224 when the data 242 indicates that the converter cell 104 should be bypassed. This causes the bypass device 222 to short-circuit the converter cell 104 at its output. Otherwise, the method may continue with step S10.

The additional control board 224 may generate the bypass switching signals 226 from the control message provided by the superordinate controller 230 and/or from the bypass command provided by the additional control board 224.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or superordinate controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: electrical converter
- 102: phase branch
- 104: converter cell
- 106: transformer
- 108: input voltage
- 110: supply voltage
- 112: secondary coil
- 114: output voltage
- 200: rectifier
- 202: DC link
- 204: inverter
- 208: supply voltage input
- 210: input terminal
- 212: charging resistor bypass switch
- 214: half bridge
- 216: output terminal
- 218: control board
- 220: switching signal
- 222: bypass device
- 224: additional control board
- 226: bypass switching signal
- 228: further switching signal
- 230: superordinate controller
- 232: control signal
- 234: measurement signal
- 236: bypass control circuit
- 238: power supply
- 240: additional fuse
- 242: data
- 244: bypass switch
- 300: ring network
- 302: daisy chain
- 304: star network
- 400: three-node ring
- C: DC link capacitor
- D1...6: diode
- F1, F2: input fuse
- R1: charging resistor
- S1...4: power switch
- S10: step of receiving data
- S20: step of processing data
- S30: step of operating the bypass device
- U1: first phase of input voltage
- U2: first phase of output voltage
- V1: second phase of input voltage
- V2: second phase of output voltage
- W1: third phase of input voltage
- W2: third phase of output voltage

## Claims

1. An electrical converter (100), comprising:
a plurality of converter cells (104) series-connected at their outputs, each of the converter cells (104) adapted for converting a supply voltage (110) into an output voltage (114);
a superordinate controller (230) for controlling the output voltage (114) of each of the converter cells (104);
wherein each of the converter cells (104) comprises a control board (218) for controlling power switches (S1, S2, S3, S4) of the converter cell (104), a bypass device (222) adapted for short-circuiting the converter cell (104) at its output and an additional control board (224) for controlling the bypass device (222);
wherein each of the control boards (218) is at least connected to the superordinate controller (230) for data communication;
wherein each of the additional control boards (224) is at least connected to another additional control board (224) for data communication.

2. The electrical converter (100) of claim 1,
wherein at least one of the additional control boards (224) is additionally connected to the superordinate controller (230) for data communication.

3. The electrical converter (100) of claim 1 or 2,
wherein the additional control boards (224) are linked together in a daisy chain (302) adapted for transmitting data (232, 234, 242) from one additional control board (224) to the next.

4. The electrical converter (100) of claim 3,
wherein the additional control boards (224) at each end of the daisy chain (302) are additionally connected to the superordinate controller (230) for data communication.

5. The electrical converter (100) of one of the previous claims,
wherein the superordinate controller (230) and the additional control boards (224) are linked together in a bidirectional ring network (300).

6. The electrical converter (100) of one of the previous claims,
wherein the control board (218) and the additional control board (224) of each of the converter cells (104) are additionally connected to each other for data communication.

7. The electrical converter (100) of one of the previous claims,
wherein the bypass device (222) comprises at least two parallel-connected bypass switches (244).

8. The electrical converter (100) of claim 7,
wherein the at least two bypass switches (244) have different current ratings and/or different switching times.

9. The electrical converter (100) of one of the previous claims,
wherein a power supply (238) of the additional control board (224) is connected to a supply voltage input (208) of the converter cell (104).

10. The electrical converter (100) of claim 9,
wherein the supply voltage input (208) comprises a fuse (F1, F2);
wherein the power supply (238) is connected to an input side of the fuse (F1, F2).

11. The electrical converter (100) of one of the previous claims,
wherein each of the converter cells (104) comprises an H-bridge inverter (204).

12. The electrical converter (100) of one of the previous claims,
wherein each of the converter cells (104) comprises a rectifier (200), an inverter (204) and a DC link (202) connecting the rectifier (200) to the inverter (204).

13. The electrical converter (100) of one of the previous claims,
wherein the plurality of converter cells (104) are series-connected at their outputs in each of a plurality of phase branches (102) adapted for providing a multi-phase output voltage;
wherein the additional control boards (224) within each phase branch (102) are linked together in a daisy chain (302) adapted for transmitting data (232, 234, 242) from one additional control board (224) to the next.

14. A method for bypassing a converter cell (104) of an electrical converter (100), the electrical converter (100) comprising:
a plurality of converter cells (104) series-connected at their outputs, each of the converter cells (104) adapted for converting a supply voltage (110) into an output voltage (114);
a superordinate controller (230) for controlling the output voltage (114) of each of the converter cells (104);
wherein each of the converter cells (104) comprises a control board (218) for controlling power switches (S1, S2, S3, S4) of the converter cell (104), a bypass device (222) adapted for short-circuiting the converter cell (104) at its output and an additional control board (224) for controlling the bypass device (222);
wherein each of the control boards (218) is at least connected to the superordinate controller (230) for data communication;
wherein each of the additional control boards (224) is at least connected to another additional control board (224) for data communication;
the method comprising:
receiving data (232, 234, 242) at the additional control board (224) from the other additional control board (224);
when the data (232, 234, 242) indicates that the converter cell (104) should be bypassed:
controlling the bypass device (222) such that the converter cell (104) is short-circuited at its output.

15. The method of claim 14,
wherein the data (234, 242) comprises measured output voltages of each of the converter cells (104).
